# EUROPEAN PATENT SPECIFICATION

(11) **EP 1 234 458 B1**
(45) Date of publication and mention of the grant of the patent: **12.08.2009**
(21) Application number: 00980136.6
(22) Date of filing: 06.12.2000
(51) Int. Cl.: H04W 8/18, H04L 29/06, G06F 12/00, G06F 13/00

(54) **A METHOD AND ARRANGEMENT FOR H.323 SERVICES CONFIGURATION BY MOBILE WIRELESS TERMINALS**
VERFAHREN UND VORRICHTUNG FÜR H.323 DIENSTKONFIGURATION DURCH MOBILE DRAHTLOSE ENDGERÄTE
SYSTEME ET PROCEDES DESTINES A LA CONFIGURATION DES SERVICES SELON H.323 PAR DES TERMINAUX MOBILES SANS FIL

(30) Priority: 06.12.1999 NO 995986
(43) Date of publication of application: 28.08.2002
(73) Proprietor: TELEFONAKTIEBOLAGET LM ERICSSON (publ), 164 83 Stockholm (SE)
(72) Inventor: CORNELIUSSEN BACH, Knut, Snorre, N-0273 Oslo (NO)
(74) Representative: Wesmann, Johan Fredrik
(86) International application number: PCT/NO2000/000416
(87) International publication number: WO 2001/041473

(56) References cited:
- WO-A1-00/14640
- WO-A1-00/40044
- WO-A1-99/57862
- US-A- 5 937 041

## Description

### FIELD OF THE INVENTION.

The present invention is related to a network that combines Global System for Mobile Communications (GSM), Generic Packet Radio Service (GPRS) and Universal Mobile Telecommunications System (UMTS) with fixed data networks, based on protocols such as H.323 or Session initiation Protocol (SIP). In particular, the present invention is related to a means and method allowing easy user configuration of services provided by such networks.

### THE PROBLEM AREAS.

The H.323 standard as disclosed by ITU-T Recommendation H.323, 02/98, "Packet- based multimedia communications system", specifies signalling and transport for multimedia traffic over a packet switched network. The GSM specifies signalling and media transport for cellular wireless user terminals connected via a radio link. Other protocols, such as SIP disclosed by Handley, M., Schulzrinne, H., Schooler E., Rosenberg J., "SIP, Session Initiation Protocol", Internet Engineering Task Force, RFC 2543, March 1999, and Media Gateway Control Protocol (MGCP) disclosed by Arango, M., A. Dugan, I. Elliott, C. Huitema, S. Pickett, "Media Gateway Control Protocol (MGCP), work in progress" may be used instead of H.323. The UMTS, for which a description can be found at the URL (Internet Universal Address Locator) http://www.umts-forum.org/, and the GPRS, for which a description can be found at the URL http://www.etsi.org/smg/work/gprs_spec.htm, can also be used.

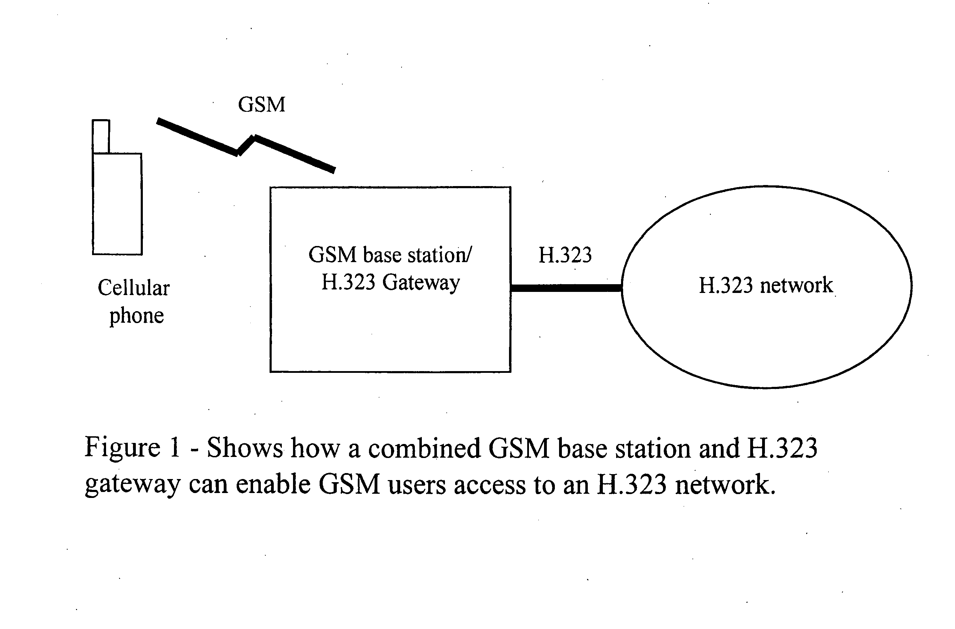

A combined GSM and H.323 network will be of particular interest to companies or organisations that already have a LAN with H.323 and users with cellular phones. By adding a combined GSM base station and H.323 gateway, such organisations could give GSM users access to the H.323 network (see fig. 1). One advantage of such a network is that it gives users of wireless terminals the ability to make their calls over a network which could be priced lower than the public switched telephone network (PSTN). When the calling and called parties are communicating by means of the same base station or LAN (i.e. in-house calling), the call will be carried solely on the corporate LAN. If the destination is outside the range of the base station or LAN, a wide area network (WAN) or the Internet could be used to carry the call. Another advantage of such a network is that it gives GSM users access to H.323 services.

By the term services, as used hereinafter, is meant "extra logic" which is added to a call. An example of "extra logic" is call forwarding, whereby a call may be re-routed to a network destination other the one specified by the calling party. Another example of a service is short number dialling, enabling a user to use fewer digits when a call is made inside a closed user group.

Such services as mentioned above must be configured. For the service examples above, in the case of call forwarding a destination for the re-routed call must be specified, and for short numbers a destination corresponding to a short number must be specified. The use of a service such as call forwarding may be described by the following example:
1) A user makes a call
2) The call is received by a server (a gatekeeper in H.323; a SIP server in SIP).
3) The server collects the destination number and uses this information to check in the users profile base to see if this user has a call forwarding service active.
4) If the call forwarding service is active, the destination number is changed to the forwarding number, and the call is then routed through the network according to the new destination number.

The never version including annexes of the H.323 protocol includes support for H.450 services. Although the support for H.450 services or any other types of services is not widespread in H.323 networks today, services on top of H.323 will probably be very common in the future. The H.323 protocol, however, does not include a protocol for user configuration of services. Examples of configuring a service are:
- Configuring a call-forwarding number
- Configuring a call find-me service list. A call find-me service gives the users the possibility to have a prioritised list of numbers according to which a call is forwarded to when there is no answer. Assume that the office phone of a user is placed first on the list, then the number of cellular, and finally the number of the receptionist phone. If a caller tries to call the user at her/his office, and she/he does not answer the phone after a specific number of "rings", then the call is forwarded to the cellular. Assume then, at the time when the call is forwarded to her/his cellular phone, that the user is in a meeting and does not want to receive calls on her/his cellular phone and has switched off the cellular phone. Then the call is forwarded to the receptionist.
- Configuring a voice e-mail service, voice mail box, "call me back", or more advanced servers like fax-reply (sends a fax to those trying to call a user on a specific number).

When GSM users are given access to services implemented on top of H.323, the problem arises that, for these users, it is difficult to configure such services. The reason for this is that typical H.323 users generally are connected to the H.323 network via their desktop personal computers (PCs). Any service on top of H.323 is therefore typically configured through an HTML based "web page" interface, such as a "web browser". Whilst PCs today are able to communicate by means of a wide range of protocols, cellular phones can make use of only a limited number of different protocols. Consequently, the problem persists for the majority of the users of cellular phones since only very few cellular phones have means for accessing such "web pages".

Today, it is quite common that companies and organisations have a local web site which is often used to inform members or employees about different company related news. The use of "web" (i.e. Internet / intranet) technology to spread company information works fine when all users have a "networked desktop", and are most of the time at their respective desktops. More advanced "web pages" can also be used. An example is a web page that contains "cgi" scripts or other types of scripts. With scripts, pages can be made that will take user inputs. Simple queries like "do you like your job: Yes/No" can be included in the web pages. These information pages and queries may also readily become available to H.323 users who use their PC's to access the H.323 network by using a typical web browser.

The Wireless Application Protocol (WAP) is intended to give users of cellular telephones and similar terminals access to a broader range of services. The main goal of the WAP protocol specification is to give GSM users access to information on the Internet. WAP is based on HTTP with optimisations for using with from a cellular phone. One of the main features of WAP is that it is easy to design an Hypertext Transfer Protocol (HTTP) to WAP gateway and Hypertext Mark-up Language (HTML) to Wireless Mark-up Language (WML) (the WAP equivalent of the HTML). Such a gateway is described in "WAP White Paper ", June 99, found at the URL http://www.wapforum.org/what/WAP_white_pages.pdf.

Document WO-9957862 discloses an hierarchical tree structure based application preferences maintaining method for network computing. The configuration preferences are obtained by determining the first group from group priority list which is used for deriving preferences for selected applications. Then, coalescing of preferences for selected application is done by traversing the tree from all user's group node to first group. The collected preferences are modified at respective nodes corresponding to specified application. When any user requests for execution of selected application, the group priority order of user is determined and a set of configuration preferences are obtained. Independent claims are also included for the following (a) application preferences maintaining apparatus; (b) a computer program product for network computing. The disclosure indicates that the method provides more organizational flexibility and administrative power than non-hierarchical structure, thus allowing large enterprise to model and organize hierarchically.

Document US-5937041 discloses retrieving and displaying Internet data files retrieving requested data files from Internet site and formatting retrieved data files for display on screen-display telephone terminal.

### KNOWN SOLUTIONS AND PROBLEMS WITH THESE.

Because today there are virtually none, or maybe very few, existing H.323 networks of general availability with services, the following known solutions are still not available to users today. Further, any available solutions today are only adaptations of what is already in use in PSTN or GSM networks.

One such solution for enabling wireless users to configure their H.323 services is to have the configuration handled by a third person. The communication with the third person could be either via ordinary mail or ordinary telephone calls. This solution will require significant amounts of human resources, and works in the same way as when configuring PSTN services available today. The user calls the telephone operator and gives instructions to enable forwarding of all calls to a different number.

Another such solution is to have an interactive voice responder for configuring H.323 services. This will free human resources.

Yet another such solution is use of e-mail with a specific format which could also be accepted to handle service configuration automatically. This method is often used for configuring a voice-mail service, or booking theatre tickets

The problem with the solutions described above is that they require at least two interfaces to enable the user to perform service configuration; one for the typical H.323 users (web-interface) and another for the GSM users. This will add complexity to the system.

### OBJECTS OF THE INVENTION.

Accordingly, it is object of the present invention to provide a common interface for service configuration for end-users who access the H.323 network from PCs and users who access the H.323 network from cellular phones.

A further object of the present invention is to obviate the limitations related to configuration of services that cellular terminal users experience, as compared to H.323 end-points.

### BRIEF DISCLOSURE OF THE INVENTION.

The present invention proposes an arrangement and method whereby both a Wireless Application Protocol (WAP) server or a WAP gateway, and a web server is added in the network. The WAP server and the WAP gateway exploit implementations of the WAP protocol specification, the main goal of which is to give GSM users access to information on the Internet. WAP is based on HTTP with optimisations for cellular phones.

In the solution according to the present invention, the web server and the WAP server or WAP gateway are used to give PC users and as well as cellular users the same possibilities for configuring their respective services.

In an aspect of the present invention, the web sever and the WAP server or WAP gateway will make use of the same interface for changing the users profile in a database.

In further aspect of the present invention, the configuration code of the WAP server can be used by the web server, and vice versa.

In yet another aspect of the present invention the arrangement is simplified by locating the WAP gateway proximal to the GSM base station/ H.323 gateway.

### BRIEF DESCRIPTION OF THE DRAWINGS.

Fig. 1 is a schematic representation of a PRIOR ART communications system allowing GSM users access to a H.323 network.
Fig. 2 is a schematic drawing illustrating a solution for a communications arrangement with GSM and H.323 according to the present invention.
Fig. 3 is a schematic drawing illustrating another solution for a communications arrangement with GSM and H.323 according to the present invention.
Fig. 4 is a message sequence diagram illustrating an example of a configuration method activity in the arrangement of fig. 2.
Fig. 5 is a message sequence diagram illustrating an example of a configuration method activity in the arrangement of fig. 3.
Fig. 6 is a message sequence diagram illustrating another example of a configuration method activity in an arrangement according to the present invention.

### DETAILED DESCRIPTION OF THE EMBODIMENTS.

In the following descriptions, only H.323 and GSM will be used as examples for explaining the present invention. Further, in an aspect of the present invention, the present invention utilises the Wireless Application Protocol (WAP).

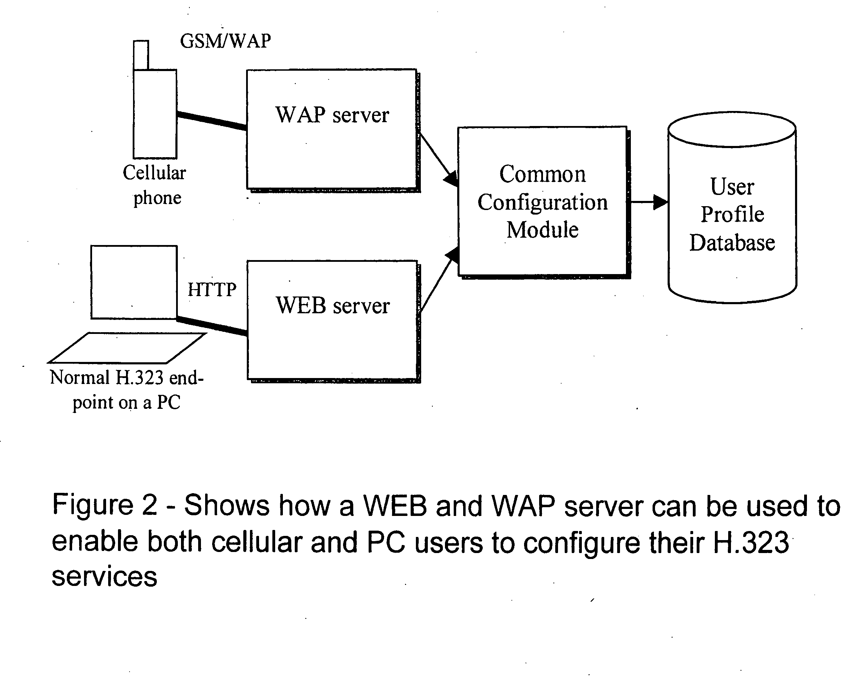

Now, with reference to fig. 2, the present invention will be explained in more detail by way of example. According to the solution of fig. 2, an arrangement according to the present invention includes a WAP server, a web server, a common configuration module and a user profile database. The arrangement enables user profile editing by means of a typical H.323 endpoint as well as a cellular telephone.

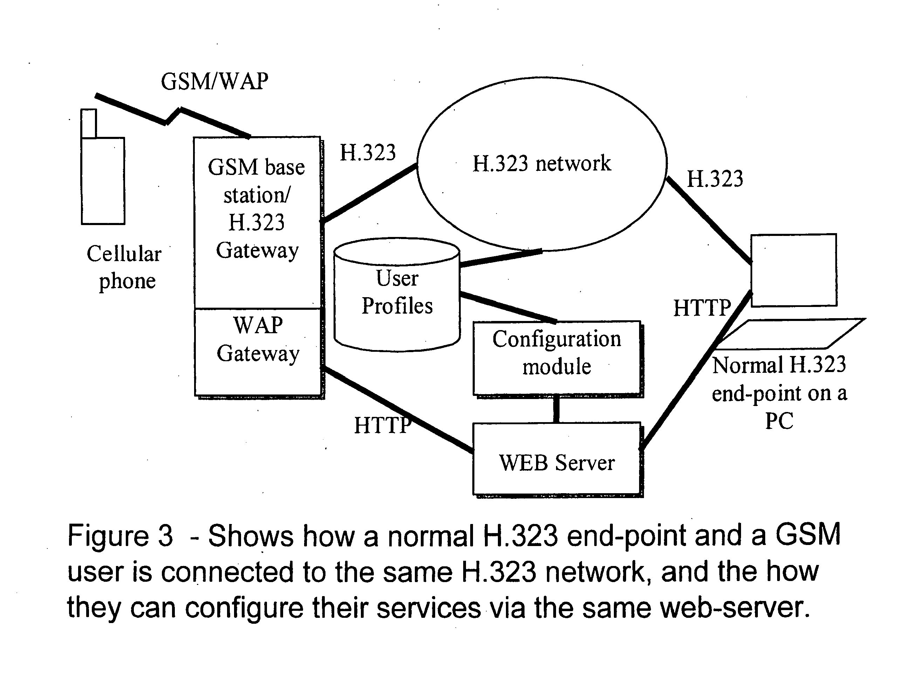

To explain the invention, another solution for an arrangement according to the present invention is shown in fig. 3. The present invention utilises the Wireless Application Protocol (WAP). Accordingly, in the arrangement shown in fig. 3 is included a unit combining a GSM base station / H.323 gateway and a WAP gateway, wherein the WAP gateway is located proximal to the combined GSM base station and H.323 gateway, the arrangement further including a web server, a configuration module, a H.323 network, a user profile database accessible from the configuration module and the H.323 network, and at least one typical H.323 endpoint on a PC. From fig. 3 it can also be seen how a typical H.323 end-point with a web browser provided can use a web browser to communicate with the web server which provides the service configuration. The GSM user will communicate with the same or a similar web server by using a mobile phone provided with WAP and a WAP gateway. From fig. 3 can also be seen how the H.323 network in the arrangement example shown may be enabled to utilise the stored user profile to determine the user service profile. Although the database is illustrated as located outside the H.323 network, it could as well be part of the H.323 network.

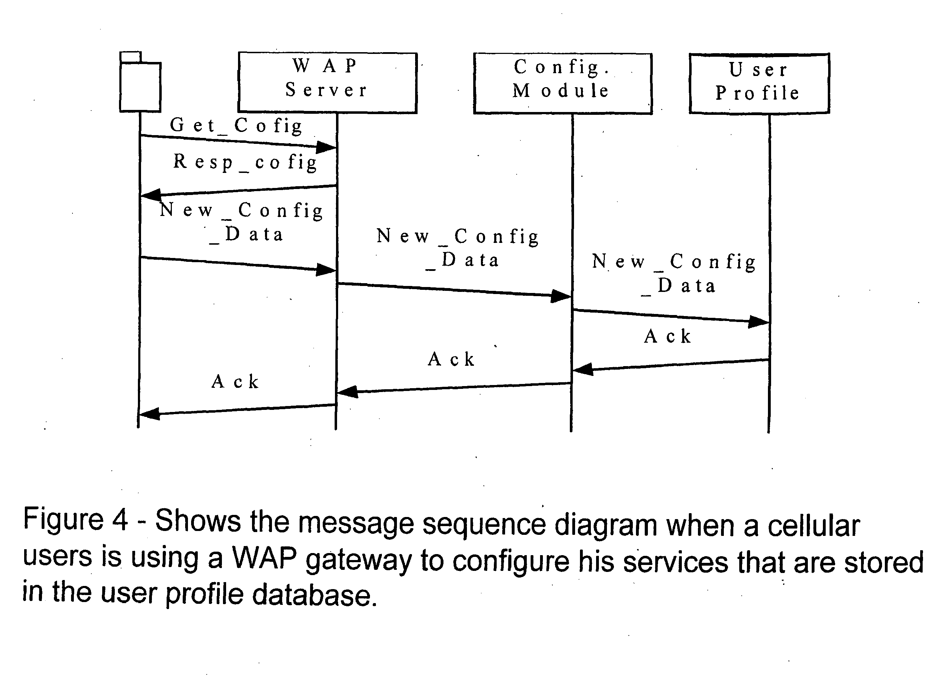

In fig. 4 is shown an example of a method for communicating configuration information in the arrangement shown in fig. 2. The cellular terminal communicates to the WAP server the desire to amend the services configuration data. Upon the appropriate response from the WAP server, new configuration data is sent from the cellular terminal to the WAP server which in turn operates on the user profile database by means of the configuration module. Upon successful amendments of the data of the user profile database, an acknowledge message is communicated back to the cellular terminal.

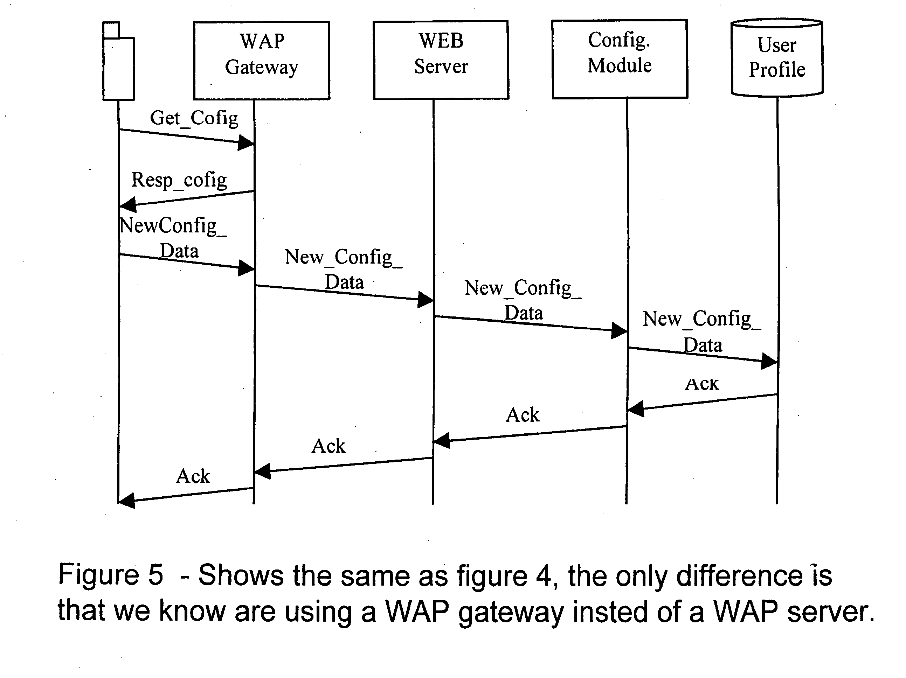

In fig. 5 is shown an example of a method for communicating configuration information in the arrangement shown in fig. 3. The cellular terminal communicates to the WAP gateway the desire to amend the services configuration data. Upon the appropriate response from the WAP gateway, new configuration data is sent from the cellular terminal to the WAP gateway. The WAP gateway then communicates the information to the web server which in turn operates on the user profile database by means of the configuration module. Upon successful amendments of the data of the user profile database, an acknowledge message is communicated back to the cellular terminal.

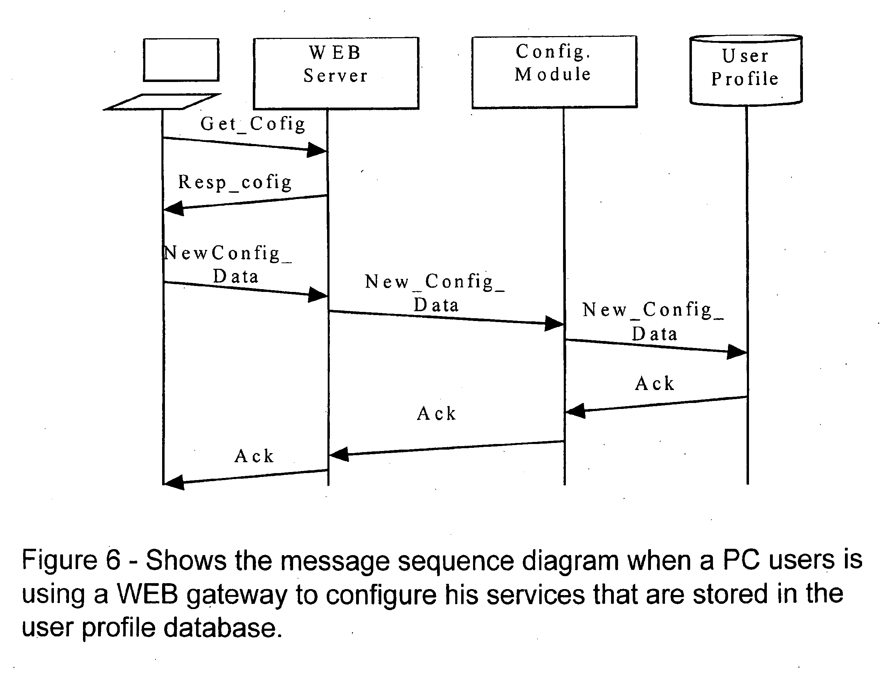

In fig. 6 is shown an example of a method for communicating configuration information in an arrangement according to the present invention, wherein a typical PC user uses a web server to configure services. The user at the PC communicates to the web server the desire to amend the services configuration data. Upon the appropriate response from the web server, new configuration data is sent from the PC to the web server. Then, the web server operates on the user profile database by means of the configuration module. Upon successful amendment of the data of the user profile database, an acknowledge message is communicated back to the PC.

### ADVANTAGES

By using a local WAP gateway or server, the combined GSM and H. 323 network with WAP will in addition to providing means fortransferring speech to H. 323 and use of its services, the present invention will provide to the GSM all of the features for services configuration that are accessible from the desktop. Further, by an arrangement and method according to the present invention, a company information server can be accessed form a web browser on a PC as well as from a WAP browser on a cellular terminal.

## Claims

1. An apparatus for configuration of a user configurable service provided by a H.323 network, the user configurable service being at least one of a call forwarding service, a short number dialling service, a call find-me service, a voice e-mail service, a call me back service and a fax-reply service, by allowing a user subscribing to the user configurable service to access a user profile database of the H.323 network from a WAP enabled mobile wireless terminal and from a web enabled H.323 endpoint, the user profile database being adapted to store user related H.323 services configuration data for said user configurable service, and being adapted to provide and receive by communication with an associated H.323 network said H.323 services configuration data to and from, respectively, said associated H.323 network in connection with provision of said user configurable service,
**characterised in that** the apparatus comprises:
a web server adapted to receive by web communication with the web enabled H.323 endpoint a first message indicating a desire to amend H.323 services configuration data, and adapted to forward to the web enabled H.323 endpoint a first H.323 services configuration data entry web page readable by the web server,
a WAP network device, said WAP network device being a WAP server or a WAP gateway to the web server, adapted to receive by WAP communication with the WAP enabled mobile wireless terminal a second message indicating a desire to amend H.323 services configuration data of said user configurable service, and adapted to forward to the mobile wireless terminal a second H.323 services configuration data entry web page readable by the WAP network device, and
a common configuration module adapted to communicate with the WAP network device for receiving H.323 services configuration data read via the second H.323 services configuration data entry web page and adapted to communicate with the web server for receiving H.323 services configuration data read via the first H.323 services configuration data entry web page, and adapted to operate on said user related H.323 services configuration data by applying received H.323 services configuration data to said user related H.323 services configuration data of the user profile database, and
said WAP gateway adapted to convert the first H.323 services data entry web page readable by the web server to the type of the second H.323 services data entry web page readable by the WAP network device for forwarding to and use by the wireless mobile terminal.

2. The apparatus of claim 1, **characterised in that** the web server is adapted to receive by HTTP communication with a normal H.323 end-point on a PC a first get_cofig message indicating a desire to amend H.323 services configuration data, and adapted to forward to the normal H.323 enabled end-point on a PC a first resp_cofig message being a proper response to the first get_cofig message, and adapted to receive a first new_config_data HTTP message from the normal H.323 enabled end-point on a PC and, responsive to receiving said first new_config_data, to forward said first new_config_data to said common configuration module, the WAP network device is a WAP server adapted to receive by WAP communication with the mobile wireless terminal a second get_cofig WAP message indicating a desire to amend H.323 services configuration data, and adapted to forward to the mobile wireless terminal a second resp_cofig WAP message being a proper response to the second get_cofig WAP message, and adapted to receive a second new_config_data WAP message from the mobile terminal and, responsive to receiving said second new_config_data, to forward said second new_config_data to said common configuration module, and the common configuration module is adapted
(a) to communicate with the web server for receiving said first new_config_data and with the WAP server for receiving said second new_config_data, and
(b) responsive to receiving said first new_config_data or said second ncw_config_data, to input said first new_config_data or said second new_config_data to said user profile database for operating on said user profile to amend the H.323 services configuration data of the user profile database.

3. The apparatus of claim 1, **characterised in that** the user profile database further being arranged in communication with a common configuration module for receiving a H.323 service configuration data input from said common configuration module, said common configuration module having a first input for connecting to the web server,
the web server is adapted to receive by HTTP communication with a normal H.323 end-point on a PC a first get_cofig message indicating a desire to amend H.323 services configuration data, and adapted to forward to the normal H.323 enabled end-point on a PC a first resp_cofig message being a proper response to the first get_cofig message, and adapted to receive a first new_config_data HTTP message from the normal H.323 enabled end-point on a PC and, responsive to receiving said first new_config_data, to forward said first new_config_data to said common configuration module, said web server further adapted for communicating with a WAP gateway,
the WAP network device is a gateway adapted to receive by WAP communication with the mobile wireless terminal a second get_cofig WAP message indicating a desire to amend H.323 services configuration data, and adapted to forward to the mobile wireless terminal a second resp_cofig WAP message being a proper response to the second get_cofig WAP message, and adapted to receive a second new_config_data WAP message from the mobile terminal and to forward second new_config_data to said web server,
the web server further is adapted to receive said second new_config_data and, responsive to receiving said second new_config_data, to forward said second new_config_data to said common configuration module, and the common configuration module further is adapted
(c) to communicate with the web server for receiving said first new_config_data or said second new_config_data, and
(d) responsive to receiving said first new_config_data or said second new_config_data, to input said first new config_data or said second new_config_data to said user profile database for operating on said user profile to amend the H.323 services configuration data of the user profile database.

4. A system for H.323 services configuration of a user configurable service provided by the H.323 network, the user configurable service being at least one of a call forwarding service, a short number dialling service, a call find-me service, a voice e-mail service, a call me back service and a fax-reply service, the system including the apparatus of claim 1 or 2, and
**characterised in that** the system comprises the user profile database adapted to store the user related H.323 services configuration data of said user configurable service, and at least one combined GSM base station with a H.323 gateway and WAP gateway for communication with the mobile wireless terminal,
the WAP gateway being connected with the H.323 network, and adapted to convert a H.323 services configuration data entry web page provided by the H.323 network to a WAP type H.323 services configuration data entry web page according to a WAP capability of the wireless mobile terminal for use by the wireless mobile terminal to operate on said user related H.323 services configuration data of the user profile database.

5. The system of claim 4, **characterised in that** the WAP gateway is proximal to the GSM base station / H.323 gateway.

6. The system of any one of claims 4 - 5, **characterised in that** the H.323 endpoints are adapted to communicate with the web server by HTTP.

7. The system of any one of claims 4 - 6, **characterised in that** the WAP gateway is adapted to communicate with the web server by HTTP;

8. The system of any one of claims 4 - 7, **characterised in**
**that**
the second configuration data entry web page is a web browser interface.

9. The system of any one of any one of claims 4 - 8,
**characterised in that** the WAP enabled mobile wireless terminal is a WAP enabled GSM mobile telephone.

10. A method for H.323 services configuration in a system according to any of claims 4 - 8,
**characterised in** providing the user profile database being accessible from a common configuration module and from the H.323 network,
communicating from the mobile wireless terminal to the WAP network device a desire to amend a H.323 services configuration data of a user profile held in the user profile database,
forwarding from the WAP network device to the mobile wireless terminal a first WAP type H.323 services configuration data entry web page made readable by the WAP network device by converting in the WAP network device a H.323 services configuration data entry web page provided by the H.323 network to a first WAP type H.323 services configuration data entry web page according to a WAP capability of the wireless mobile terminal,
receiving in the mobile wireless terminal from the WAP network device the first WAP type H.323 services configuration data entry web page readable by the WAP network device,
communicating from the mobile wireless terminal to the WAP network device first new H.323 services configuration data entered into the first WAP type H.323 services configuration data entry web page, and reading in the WAP network device said first new H.323 services configuration data and conveying said first new H.323 services configuration data to the common configuration module,
and
operating on said user related H.323 services configuration data by applying by the common configuration module, in response to receiving said first new H.323 services configuration data, said first new H.323 services configuration data to said user related H.323 services configuration data of the user profile database.

11. The method of claim 10, **characterised in**
**that** it comprises
communicating from the H.323 endpoint to the web server a desire to amend a H.323 services configuration of a user profile held in the user profile database,
receiving in the H.323 endpoint from the web server a second H.323 services configuration data entry web page readable by the web server,
communicating from the H.323 endpoint to the web server second new H.323 services configuration data entered into the second H.323 services configuration data entry web
page, and
reading by the web server said second new H.323 services configuration data and conveying said new H.323 services configuration data to the common configuration module,
and
operating on said user related H.323 services configuration data by applying by the common configuration module, in response to receiving said second new H.323 services configuration data, said second new H.323 services configuration data to said user related H.323 services configuration data of the user profile database.

12. The method of claim 10 or 11, **characterised in that** it comprises
receiving in the H.323 network from the mobile wireless terminal, via a communication with the mobile wireless terminal using a combined GSM base station with a H.323 gateway and WAP gateway, third new H.323 services configuration data, and
operating by the H.323 network, in response to receiving said third new H.323 services configuration data, on said user related H.323 services configuration data of the user profile database with said third new H.323 services configuration data.

13. The method of claim 10 - 12, **characterised in**
providing an acknowledge response to the mobile wireless terminal to said operating on said user related H.323 services configuration data of the user profile database with said new H.323 services configuration data.

14. The method according to any of claims 10 - 13,
**characterised in**
(a) providing the common configuration module in communication with the web server and the WAP server,
(b) the web server receiving from the normal H.323 end-point on a PC the first get_cofig HTTP message signalling a desire to amend a H.323 services configuration of a user profile held in the user profile database, then communicating to the normal H.323 end-point on a PC the first resp_cofig HTTP message being a proper response to the first get_cofig HTTP message, then receiving from the normal H.323 end-point on a PC the new_config_data WAP message, and, then conveying the new_config_data to the common configuration module
(c) the WAP server receiving from the mobile wireless terminal the second get_cofig WAP message signalling a desire to amend a H.323 services configuration of a user profile held in the user profile database, then communicating to the mobile wireless terminal the second resp_cofig WAP message being a proper response to the second get_cofig WAP message, then receiving from the mobile wireless terminal the second new_config_data WAP message, and, then, conveying the second new_config_data to the common configuration module, and
(d) the common configuration module, in response to receiving the first new_config_data or the second new_config_data, forwarding the first new_config_data or the second new_config_data to said user profile database for operating on said user profile to amend the data of the user profile database.

15. The method of claim 14, **characterised in**
(e) the user profile database generating an acknowledge in response to receiving the first new_config_data or the second new_config_data and a successful amendment of data of the user profile database, and forwarding the acknowledge to the common configuration module, and
(f) the common configuration module and the web server, or the common configuration module and the WAP server, co-operatively conveying the acknowledge back to the mobile wireless terminal.

16. The method according to any of claims 10 - 13,
**characterised in**
(g) providing the common configuration module in communication with the web server,
(h) providing the WAP gateway in communication with the web server,
(i) the web server receiving from the normal H.323 end-point on a PC the first get_cofig HTTP message signalling a desire to amend a H.323 services configuration of a user profile held in the user profile database, then communicating to the normal H.323 end-point on a PC the first resp_cofig HTTP message being a proper response to the first get_cofig HTTP message, then receiving from the normal H.323 end-point on a PC the new_config_data WAP message, and, then conveying the new_config_data to the common configuration module
(j) the WAP gateway receiving from the mobile wireless terminal the second get_cofig WAP message to signal a desire to amend a H.323 services configuration of a user profile held in the user profile database, then communicating to the mobile wireless terminal the second resp_cofig WAP message being a proper response to the get_cofig WAP message, then receiving from the mobile wireless terminal the second new_config_data WAP message, then conveying the second new_config_data to the web server,
(k) the web server in response to receiving the second new_config_data conveying the second new_config_data to the common configuration module, and
(l) the common configuration module, in response to receiving the first new_config_data or the second new config_data, forwarding the first new_config_data or the second new_config_data to said user profile database for operating on said user profile to amend the data of the user profile database.

17. The method of claim 16, **characterised in**
(m) the user profile database generating an acknowledge in response to receiving the first new_config_data or the second new_config_data and a successful amendment of data of the user profile database, and forwarding the acknowledge to the common configuration module, and
(n) the common configuration module and the web server, or the common configuration module, the web server and the WAP gateway, co-operatively conveying the acknowledge back to the mobile wireless terminal.

## Patentansprüche

1. Vorrichtung zur Konfiguration eines durch ein H.323-Netz bereitgestellten benutzerkonfigurierbaren Dienstes, wobei der benutzerkonfigurierbare Dienst mindestens einer eines Rufweiterleitungsdienstes, eines Kurznummernwähldienstes, eines Rufumleitungsdienstes, eines Voice-Email-Dienstes, eines Rückrufdienstes und eines Faxantwortdienstes ist, indem es einem an dem benutzerkonfigurierbaren Dienst teilnehmenden Benutzer ermöglicht wird, von einem WAP-befähigten mobilen drahtlosen Endgerät und von einem web-befähigten H.323-Endpunkt aus auf eine Benutzerprofil-Datenbank des H.323-Netzes zuzugreifen, wobei die Benutzerprofil-Datenbank dafür ausgelegt ist, benutzerbezogene H.323-Dienste-Konfigurationsdaten für den benutzerkonfigurierbaren Dienst zu speichern, und dafür ausgelegt ist, in Verbindung mit der Bereitstellung des benutzerkonfigurierbaren Dienstes durch Kommunikation mit einem zugeordneten H.323-Netz die H.323-Dienste-Konfigurationsdaten zu bzw. von dem zugeordneten H.323-Netz zu liefern und zu empfangen,
**dadurch gekennzeichnet, dass** die Vorrichtung Folgendes umfasst:
einen Web-Server, der dafür ausgelegt ist, durch Web-Kommunikation mit dem web-befähigten H.323-Endpunkt eine erste Nachricht zu empfangen, die einen Wunsch anzeigt, H.323-Dienste-Konfigurationsdaten abzuändern, und dafür ausgelegt ist, eine durch den Web-Server lesbare erste H.323-Dienste-Konfigurationsdaten-Eingabe-Webseite zu dem web-befähigten H.323-Endpunkt weiterzuleiten,
eine WAP-Netzeinrichtung, wobei die WAP-Netzeinrichtung ein WAP-Server oder ein WAP-Gateway zu dem Web-Server ist, die dafür ausgelegt ist, durch WAP-Kommunikation mit dem WAP-befähigten mobilen drahtlosen Endgerät eine zweite Nachricht zu empfangen, die einen Wunsch anzeigt, H.323-Dienste-Konfigurationsdaten des benutzerkonfigurierbaren Dienstes abzuändern, und dafür ausgelegt ist, eine durch die WAP-Netzeinrichtung lesbare zweite H.323-Dienste-Konfigurationsdaten-Eingabe-Webseite zu dem mobilen drahtlosen Endgerät weiterzuleiten, und
ein gemeinsames Konfigurationsmodul, das dafür ausgelegt ist, mit der WAP-Netzeinrichtung zu kommunizieren, um über die zweite H.323-Dienste-Konfigurationsdaten-Eingabe-Webseite gelesene H.323-Dienste-Konfigurationsdaten zu empfangen, und dafür ausgelegt ist, mit dem Web-Server zu kommunizieren, um über die erste H.323-Dienste-Konfigurationsdaten-Eingabe-Webseite gelesene H.323-Dienste-Konfigurationsdaten zu empfangen, und dafür ausgelegt ist, an den benutzerbezogenen H.323-Dienste-Konfigurationsdaten durch Anwenden empfangener H.323-Dienste-Konfigurationsdaten auf die benutzerbezogenen H.323-Dienste-Konfigurationsdaten der Benutzerprofil-Datenbank zu operieren, und wobei das WAP-Gateway dafür ausgelegt ist, die durch den Web-Server lesbare erste H.323-Dienste-Daten-Eingabe-Webseite zur Weiterleitung an und Verwendung durch das mobile drahtlose Endgerät in den Typ der durch die WAP-Netzeinrichtung lesbaren zweiten H.323-Dienste-Daten-Eingabe-Webseite umzusetzen.

2. Vorrichtung nach Anspruch 1, **dadurch**
**gekennzeichnet, dass**
der Web-Server dafür ausgelegt ist, durch HTTP-Kommunikation mit einem normalen H.323-Endpunkt auf einem PC eine erste get_cofig-Nachricht zu empfangen, die einen Wunsch anzeigt, H.323-Dienste-Konfigurationsdaten abzuändern, und dafür ausgelegt ist, eine erste resp_cofig-Nachricht, die eine ordnungsgemäße Antwort auf die erste get_cofig-Nachricht ist, zu dem normalen H.323-befähigten Endpunkt auf einem PC weiterzuleiten, und dafür ausgelegt ist, eine erste new_config_data-HTTP-Nachricht von dem normalen H.323-befähigten Endpunkt auf einem PC zu empfangen und als Reaktion auf das Empfangen der new_config_data die ersten new_config_data zu dem gemeinsamen Konfigurationsmodul weiterzuleiten,
die WAP-Netzeinrichtung ein WAP-Server ist, der dafür ausgelegt ist, durch WAP-Kommunikation mit dem mobilen drahtlosen Endgerät eine zweite get_cofig-WAP-Nachricht zu empfangen, die einen Wunsch anzeigt, H.323-Dienste-Konfigurationsdaten abzuändern, und dafür ausgelegt ist, eine zweite resp_cofig-WAP-Nachricht, die eine ordnungsgemäße Antwort auf die zweite get_cofig-WAP-Nachricht ist, zu dem mobilen drahtlosen Endgerät weiterzuleiten, und dafür ausgelegt ist, eine zweite new_config_data-WAP-Nachricht von dem mobilen Endgerät zu empfangen und als Reaktion auf das Empfangen der zweiten new_config_data die zweiten new_config_data zu dem gemeinsamen Konfigurationsmodul weiterzuleiten, und
das gemeinsame Konfigurationsmodul dafür ausgelegt ist,
(a) mit dem Web-Server zu kommunizieren, um die ersten new_config_data zu empfangen, und mit dem WAP-Server zu kommunizieren, um die zweiten new_config_data zu empfangen, und
(b) als Reaktion auf das Empfangen der ersten new_config_data oder der zweiten new_config_data die ersten new_config_data oder die zweiten new_config_data in die Benutzerprofil-Datenbank einzugeben, um an dem Benutzerprofil zu operieren, um die H.323-Dienste-Konfigurationsdaten der Benutzerprofil-Datenbank abzuändern.

3. Vorrichtung nach Anspruch 1, **dadurch**
**gekennzeichnet, dass**
die Benutzerprofil-Datenbank ferner in Kommunikation mit einem gemeinsamen Konfigurationsmodul ausgelegt ist, um eine H.323-Dienst-Konfigurationsdateneingabe von dem gemeinsamen Konfigurationsmodul zu empfangen, wobei das gemeinsame Konfigurationsmodul einen ersten Eingang zur Verbindung mit dem Web-Server aufweist,
der Web-Server dafür ausgelegt ist, durch HTTP-Kommunikation mit einem normalen H.323-Endpunkt auf einem PC eine erste get_cofig-Nachricht zu empfangen, die einen Wunsch anzeigt, H.323-Dienste-Konfigurationsdaten abzuändern, und dafür ausgelegt ist, eine erste resp_cofig-Nachricht, die eine ordnungsgemäße Antwort auf die erste get_cofig-Nachricht ist, zu dem normalen H.323-befähigten Endpunkt auf einem PC weiterzuleiten, und dafür ausgelegt ist, eine erste new_config_data-HTTP-Nachricht von dem normalen H.323-befähigten Endpunkt auf einem PC zu empfangen und als Reaktion auf das Empfangen der ersten new_config_data die ersten new_config_data zu dem gemeinsamen Konfigurationsmodul weiterzuleiten, wobei der Web-Server ferner für Kommunikation mit einem WAP-Gateway ausgelegt ist,
die WAP-Netzeinrichtung ein Gateway ist, das dafür ausgelegt ist, durch WAP-Kommunikation mit dem mobilen drahtlosen Endgerät eine zweite get_cofig-WAP-Nachricht zu empfangen, die einen Wunsch anzeigt, H.323-Dienste-Konfigurationsdaten abzuändern, und dafür ausgelegt ist, eine zweite resp_cofig-WAP-Nachricht, die eine ordnungsgemäße Antwort auf die zweite get_cofig-WAP-Nachricht ist, zu dem mobilen drahtlosen Endgerät weiterzuleiten, und dafür ausgelegt ist, eine zweite new_config_data-WAP-Nachricht von dem mobilen Endgerät zu empfangen und die zweiten new_config_data zu dem Web-Server weiterzuleiten,
der Web-Server ferner dafür ausgelegt ist, die zweiten new_config_data zu empfangen und als Reaktion auf das Empfangen der zweiten new_config_data die zweiten new_config_data zu dem gemeinsamen Konfigurationsmodul weiterzuleiten, und
das gemeinsame Konfigurationsmodul ferner dafür ausgelegt ist,
(c) mit dem Web-Server zu kommunizieren, um die ersten new_config_data oder die zweiten new_config_data zu empfangen, und
(d) als Reaktion auf das Empfangen der ersten new_config_data oder der zweiten new_config_data die ersten new_config_data oder die zweiten new_config_data in die Benutzerprofil-Datenbank einzugeben, um an dem Benutzerprofil zu operieren, um die H.323-Dienste-Konfigurationsdaten der Benutzerprofil-Datenbank abzuändern.

4. System zur H.323-Dienstekonfiguration eines durch das H.323-Netz bereitgestellten benutzerkonfigurierbaren Dienstes, wobei der benutzerkonfigurierbare Dienst mindestens einer eines Rufweiterleitungsdienstes, eines Kurznummernwähldienstes, eines Rufumleitungsdienstes, eines Voice-Email-Dienstes, eines Rückrufdienstes und eines Faxantwortdienstes ist, wobei das System die Vorrichtung nach Anspruch 1 oder 2 enthält, und
**dadurch gekennzeichnet, dass** das System Folgendes umfasst: die Benutzerprofil-Datenbank, die dafür ausgelegt ist, die benutzerbezogenen H.323-Dienste-Konfigurationsdaten des benutzerkonfigurierbaren Dienstes zu speichern, und
mindestens eine kombinierte GSM-Basisstation mit einem H.323-Gateway und einem WAP-Gateway zur Kommunikation mit dem mobilen drahtlosen Endgerät,
wobei das WAP-Gateway mit dem H.323-Netz verbunden ist und dafür ausgelegt ist, eine durch das H.323-Netz bereitgestellte H.323-Dienste-Konfigurationsdaten-Eingabe-Webseite in eine H.323-Dienste-Konfigurationsdaten-Eingabe-Webseite des WAP-Typs gemäß einer WAP-Fähigkeit des drahtlosen mobilen Endgeräts zur Verwendung durch das drahtlose mobile Endgerät, um an den benutzerbezogenen H.323-Dienste-Konfigurationsdaten der Benutzerprofil-Datenbank zu operieren, umzusetzen.

5. System nach Anspruch 4, **dadurch gekennzeichnet, dass** das WAP-Gateway proximal zu der GSM-Basisstation bzw. dem H.323-Gateway ist.

6. System nach einem der Ansprüche 4-5, **dadurch gekennzeichnet, dass** die H.323-Endpunkte dafür ausgelegt sind, durch HTTP mit dem Web-Server zu kommunizieren.

7. System nach einem der Ansprüche 4-6, **dadurch gekennzeichnet, dass** das WAP-Gateway dafür ausgelegt ist, durch HTTP mit dem Web-Server zu kommunizieren.

8. System nach einem der Ansprüche 4-7, **dadurch gekennzeichnet, dass** die zweite Konfigurationsdaten-Eingabe-Webseite eine Web-Browser-Schnittstelle ist.

9. System nach einem der Ansprüche 4-8, **dadurch gekennzeichnet, dass** das WAP-befähigte mobile drahtlose Endgerät ein WAP-befähigtes GSM-Mobiltelefon ist.

10. Verfahren zur H.323-Dienstekonfiguration in einem System nach einem der Ansprüche 4-8, **gekennzeichnet durch**
Bereitstellen der Benutzerprofil-Datenbank, die von einem gemeinsamen Konfigurationsmodul und von dem H.323-Netz aus zugänglich ist,
Übermitteln eines Wunsches, H.323-Dienste-Konfigurationsdaten eines in der Benutzerprofil-Datenbank gehaltenen Benutzerprofils abzuändern, von dem mobilen drahtlosen Endgerät zu der WAP-Netzeinrichtung,
Weiterleiten einer **durch** die WAP-Netzeinrichtung lesbar gemachten ersten H.323-Dienste-Konfigurationsdaten-Eingabe-Webseite des WAP-Typs von der WAP-Netzeinrichtung zu dem mobilen drahtlosen Endgerät **durch** Umsetzen einer **durch** das H.323-Netz bereitgestellten H.323-Dienste-Konfigurationsdaten-Eingabe-Webseite in eine erste H.323-Dienste-Konfigurationsdaten-Eingabe-Webseite des WAP-Typs gemäß einer WAP-Fähigkeit des drahtlosen mobilen Endgeräts in der WAP-Netzeinrichtung,
Empfangen der **durch** die WAP-Netzeinrichtung lesbaren ersten H.323-Dienste-Konfigurationsdaten-Eingabe-Webseite des WAP-Typs in dem mobilen drahtlosen Endgerät von der WAP-Netzeinrichtung,
Übermitteln von in die erste H.323-Dienste-Konfigurationsdaten-Eingabe-Webseite des WAP-Typs eingegebenen ersten neuen H.323-Dienste-Konfigurationsdaten von dem mobilen drahtlosen Endgerät zu der WAP-Netzeinrichtung und
Lesen der ersten neuen H.323-Dienste-Konfigurationsdaten in der WAP-Netzeinrichtung und Übertragen der ersten neuen H.323-Dienste-Konfigurationsdaten zu dem gemeinsamen Konfigurationsmodul und
Operieren an den benutzerbezogenen H.323-Dienste-Konfigurationsdaten **durch** Anwenden der ersten neuen H.323-Dienste-Konfigurationsdaten auf die benutzerbezogenen H.323-Dienste-Konfigurationsdaten der Benutzerprofil-Datenbank **durch** das gemeinsame Konfigurationsmodul als Reaktion auf das Empfangen der ersten neuen H.323-Dienste-Konfigurationsdaten.

11. Verfahren nach Anspruch 10, **dadurch gekennzeichnet, dass** es Folgendes umfasst:
Übermitteln eines Wunsches, eine H.323-Dienstekonfiguration eines in der Benutzerprofil-Datenbank gehaltenen Benutzerprofils abzuändern, von dem H.323-Endpunkt zu dem Web-Server,
Empfangen einer durch den Web-Server lesbaren zweiten H.323-Dienste-Konfigurationsdaten-Eingabe-Webseite in dem H.323-Endpunkt von dem Web-Server,
Übermitteln von in die zweite H.323-Dienste-Konfigurationsdaten-Eingabe-Webseite eingegebenen zweiten neuen H.323-Dienste-Konfigurationsdaten von dem H.323-Endpunkt zu dem Web-Server und
Lesen der zweiten neuen H.323-Dienste-Konfigurationsdaten durch den Web-Server und Übertragen der neuen H.323-Dienste-Konfigurationsdaten zu dem gemeinsamen Konfigurationsmodul und
Operieren an den benutzerbezogenen H.323-Dienste-Konfigurationsdaten durch Anwenden der zweiten neuen H.323-Dienste-Konfigurationsdaten auf die benutzerbezogenen H.323-Dienste-Konfigurationsdaten der Benutzerprofil-Datenbank durch das gemeinsame Konfigurationsmodul als Reaktion auf das Empfangen der zweiten neuen H.323-Dienste-Konfigurationsdaten.

12. Verfahren nach Anspruch 10 oder 11, **dadurch gekennzeichnet, dass** es Folgendes umfasst:
Empfangen von dritten neuen H.323-Dienste-Konfigurationsdaten in dem H.323-Netz von dem mobilen drahtlosen Endgerät über eine Kommunikation mit dem mobilen drahtlosen Endgerät unter Verwendung einer kombinierten GSM-Basisstation mit einem H.323-Gateway und einem WAP-Gateway und Operieren an den benutzerbezogenen H.323-Dienste-Konfigurationsdaten der Benutzerprofil-Datenbank mit den dritten neuen H.323-Dienste-Konfigurationsdaten durch das H.323-Netz als Reaktion auf das Empfangen der dritten neuen H.323-Dienste-Konfigurationsdaten.

13. Verfahren nach Anspruch 10-12, **gekennzeichnet durch** Bereitstellen einer Bestätigungsantwort an das mobile drahtlose Endgerät auf das Operieren an den benutzerbezogenen H.323-Dienste-Konfigurationsdaten der Benutzerprofil-Datenbank mit den neuen H.323-Dienste-Konfigurationsdaten.

14. Verfahren nach einem der Ansprüche 10-13, **gekennzeichnet durch** Folgendes:
(a) Bereitstellen des gemeinsamen Konfigurationsmoduls in Kommunikation mit dem Web-Server und dem WAP-Server,
(b) dass der Web-Server von dem normalen H.323-Endpunkt auf einem PC die erste get_cofig-HTTP-Nachricht empfängt, die einen Wunsch signalisiert, eine H.323-Dienstekonfiguration eines in der Benutzerprofil-Datenbank gehaltenen Benutzerprofils abzuändern, und dann die erste resp_cofig-HTTP-Nachricht, die eine ordnungsgemäße Antwort auf die erste get_cofig-HTTP-Nachricht ist, zu dem normalen H.323-Endpunkt auf einem PC übermittelt wird und dann von dem normalen H.323-Endpunkt auf einem PC die new_config_data-WAP-Nachricht empfangen wird und dann die new_config_data zu dem gemeinsamen Konfigurationsmodul übertragen werden,
(c) dass der WAP-Server von dem mobilen drahtlosen Endgerät die zweite get_cofig-WAP-Nachricht empfängt, die einen Wunsch signalisiert, eine H.323-Dienstekonfiguration eines in der Benutzerprofil-Datenbank gehaltenen Benutzerprofils abzuändern, und dann die zweite resp_cofig-WAP-Nachricht, die eine ordnungsgemäße Antwort auf die zweite get_cofig-WAP-Nachricht ist, zu dem mobilen drahtlosen Endgerät übermittelt wird und dann von dem mobilen drahtlosen Endgerät die zweite new_config_data-WAP-Nachricht empfangen wird und dann die zweiten new_config_data zu dem gemeinsamen Konfigurationsmodul übertragen werden und
(d) dass das gemeinsame Konfigurationsmodul als Reaktion auf das Empfangen der ersten new_config_data oder der zweiten new_config_data die ersten new_config_data oder die zweiten new_config_data zu der Benutzerprofil-Datenbank weiterleitet, um an dem Benutzerprofil zu operieren, um die Daten der Benutzerprofil-Datenbank abzuändern.

15. Verfahren nach Anspruch 14, **dadurch gekennzeichnet, dass**
(e) die Benutzerprofil-Datenbank als Reaktion auf das Empfangen der ersten new_config_data oder der zweiten new_config_data und eine erfolgreiche Abänderung von Daten der Benutzerprofil-Datenbank eine Bestätigung erzeugt und die Bestätigung zu dem gemeinsamen Konfigurationsmodul weiterleitet und
(f) das gemeinsame Konfigurationsmodul und der Web-Server oder das gemeinsame Konfigurationsmodul und der WAP-Server kooperativ die Bestätigung zu dem mobilen drahtlosen Endgerät zurückübertragen.

16. Verfahren nach einem der Ansprüche 10-13, **gekennzeichnet durch** Folgendes:
(g) Bereitstellen des gemeinsamen Konfigurationsmoduls in Kommunikation mit dem Web-Server,
(h) Bereitstellen des WAP-Gateway in Kommunikation mit dem Web-Server,
(i) dass der Web-Server von dem normalen H.323-Endpunkt auf einem PC die erste get_cofig-HTTP-Nachricht empfängt, die einen Wunsch signalisiert, eine H.323-Dienstekonfiguration eines in der Benutzerprofil-Datenbank gehaltenen Benutzerprofils abzuändern, und dann die erste resp_cofig-HTTP-Nachricht, die eine ordnungsgemäße Antwort auf die erste get_cofig-HTTP-Nachricht ist, zu dem normalen H.323-Endpunkt auf einem PC übermittelt wird und dann von dem normalen H.323-Endpunkt auf einem PC die new config data-WAP-Nachricht empfangen wird und dann die new_config_data zu dem gemeinsamen Konfigurationsmodul übertragen werden,
(j) dass das WAP-Gateway von dem mobilen drahtlosen Endgerät die zweite get_cofig-WAP-Nachricht empfängt, um einen Wunsch zu signalisieren, eine H.323-Dienstekonfiguration eines in der Benutzerprofil-Datenbank gehaltenen Benutzerprofils abzuändern, und dann die zweite resp_cofig-WAP-Nachricht, die eine ordnungsgemäße Antwort auf die zweite get_cofig-WAP-Nachricht ist, zu dem mobilen drahtlosen Endgerät übermittelt wird und dann von dem mobilen drahtlosen Endgerät die zweite new_config_data-WAP-Nachricht empfangen wird und dann die zweiten new_config_data zu dem Web-Server übertragen werden,
(k) dass der Web-Server als Reaktion auf das Empfangen der zweiten new_config_data die zweiten new_config_data zu dem gemeinsamen Konfigurationsmodul überträgt und
(l) dass das gemeinsame Konfigurationsmodul als Reaktion auf das Empfangen der ersten new_config_data oder der zweiten new_config_data die ersten new_config_data oder die zweiten new_config_data zu der Benutzerprofil-Datenbank weiterleitet, um an dem Benutzerprofil zu operieren, um die Daten der Benutzerprofil-Datenbank abzuändern.

17. Verfahren nach Anspruch 16, **dadurch gekennzeichnet, dass**
(m) die Benutzerprofil-Datenbank als Reaktion auf das Empfangen der ersten new_config_data oder der zweiten new_config_data und eine erfolgreiche Abänderung von Daten der Benutzerprofil-Datenbank eine Bestätigung erzeugt und die Bestätigung zu dem gemeinsamen Konfigurationsmodul weiterleitet und
(n) das gemeinsame Konfigurationsmodul und der Web-Server oder das gemeinsame Konfigurationsmodul, der Web-Server und das WAP-Gateway kooperativ die Bestätigung zu dem mobilen drahtlosen Endgerät zurückübertragen.

## Revendications

1. Appareil de configuration d'un service au protocole H.323 configurable par un utilisateur, le service configurable par l'utilisateur étant au moins l'un d'un service de renvoi automatique d'appel, d'un service de composition par numéro abrégé, d'un service de recherche, d'un service de courriel vocal, d'un service de rappel et d'un service de réponse à une télécopie, en permettant à un utilisateur souscrivant au service configurable par l'utilisateur d'accéder à une base de données de profils utilisateurs du réseau au protocole H.323 à partir d'un terminal sans fil mobile validé pour le protocole WAP et depuis un point de connexion au protocole H.323 validé pour le Web, la base de données de profils utilisateurs étant conçue pour stocker des données de configuration de services H.323 se rapportant à l'utilisateur destinées audit service configurable par l'utilisateur et étant conçue pour fournir et recevoir respectivement par communication avec un réseau associé H.323 lesdites données de configuration de services H.323 vers et depuis ledit réseau H.323 associé, en relation avec la fourniture dudit service configurable par l'utilisateur,
**caractérisé en ce que** l'appareil comprend :
un serveur Web conçu pour recevoir grâce à une communication Web avec le point de connexion H.323 validé pour le Web un premier message indiquant un souhait de modification des données de configuration de services H.323, et conçu pour propager vers le point de connexion H.323 validé pour le Web une première page Web d'entrée de données de configuration de services H.323 lisible par le serveur Web,
un dispositif de réseau au protocole WAP, ledit dispositif de réseau WAP étant un serveur WAP ou une passerelle WAP vers le serveur Web conçu pour recevoir, grâce à une communication au protocole WAP avec le terminal sans fil mobile validé pour le protocole WAP, un second message indiquant un souhait de modification des données de configuration de services H.323 dudit service configurable par l'utilisateur et conçu pour propager vers le terminal sans fil mobile une seconde page Web d'entrée de données de configuration de services H.323 pouvant être lues par le dispositif du réseau WAP, et
un module de configuration commun conçu pour communiquer avec le dispositif du réseau WAP afin de recevoir les données de configuration de services H.323 lues par l'intermédiaire de la seconde page Web d'entrée de données de configuration de services H.323, conçu également pour communiquer avec le serveur Web pour recevoir les données de configuration de services H.323 par l'intermédiaire de la première page Web d'entrée de données de configuration de services H.323, tout comme il est conçu pour opérer sur lesdites données de configuration de services H.323 se rapportant à l'utilisateur en appliquant les données de configuration de services H.323 reçues sur lesdites données de configuration de services H.323 se rapportant à l'utilisateur provenant de la base de données de profils utilisateurs, ladite passerelle WAP étant conçue pour convertir la première page Web d'entrée de données de services H.323 pouvant être lues par le serveur Web selon le type de la seconde page Web d'entrée de données de services H.323 pouvant être lues par le dispositif de réseau WAP en vue de les propager vers le terminal mobile sans fil et de les utiliser par celui-ci.

2. Appareil selon la revendication 1, **caractérisé en ce que** le serveur Web est conçu pour recevoir, grâce à une communication au protocole HTTP avec un point de connexion H.323 sur un PC, un premier message get_cofig indiquant un souhait de modification des données de configuration de services H.323, et il est conçu pour propager vers le point de connexion normal validé au protocole H.323 sur un PC, un premier message resp_cofig comme étant la réponse appropriée au premier message get_cofig, tout comme il est conçu pour recevoir un premier message au protocole HTTP new_config_data en provenance du point de connexion normal validé H.323 sur un PC et, en réponse à la réception dudit premier new_config_data, de propager ledit premier message new_config_data audit module de configuration commun, le dispositif du réseau WAP est un serveur WAP conçu pour recevoir, grâce à une communication WAP avec le terminal sans fil mobile, un second message WAP get_cofig indiquant un souhait de modifier les données de configuration de services H.323 tout comme il est conçu pour propager vers le terminal sans fil mobile un second message WAP resp_cofig représentant la réponse appropriée au second message WAP get_cofig, tout comme il est conçu pour recevoir un second message WAP new_config_data en provenance du terminal mobile et, en réponse à la réception dudit second message new_config_data, de propager ledit second message new_config_data audit module de configuration commun, et le module de configuration commun est conçu :
(a) pour communiquer avec le serveur Web afin de recevoir ledit premier message new_config_data et avec le serveur WAP pour recevoir ledit second message new_config_data, et
(b) en réponse à la réception dudit premier message new_config_data ou dudit second message new_config_data, d'appliquer en entrée ledit premier message new_config_data ou ledit second message new_config_data à ladite base de données de profils utilisateurs afin de travailler sur ledit profil utilisateur pour modifier les données de configuration de services H.323 de la base de données de profils utilisateurs.

3. Appareil selon la revendication 1, **caractérisé en ce que** la base de données de profils utilisateurs est en outre agencée pour communiquer avec un module de configuration mobile pour recevoir des données de configuration de services H.323 entrées depuis ledit module de configuration commun, ledit module de configuration commun comportant une première entrée en vue d'une connexion au serveur Web, le serveur Web est conçu pour recevoir grâce à une communication au protocole HTTP, avec un point normal de communication H.323 sur un PC, un premier message get_cofig indiquant un souhait pour modifier les données de configuration de services H.323, et il est conçu pour propager vers le point normal de connexion validé H.323 sur un PC un premier message resp_cofig constituant une réponse appropriée au premier message get_cofig, tout comme il est conçu pour recevoir un premier message new_config_data au protocole HTTP provenant du point de connexion normal validé H.323 sur un PC et, à la réponse de la réception dudit premier message new_config_data, à propager ledit premier message new_config_data audit module de configuration commun, ledit serveur Web étant en outre conçu pour communiquer avec une passerelle WAP, le dispositif du serveur WAP est une passerelle conçue pour recevoir grâce à une communication WAP avec le terminal sans fil mobile un second message WAP get_cofig indiquant un souhait de modifier les données de configuration de services H.323, et conçue pour propager vers le terminal sans fil mobile un second message WAP resp_cofig constituant une réponse appropriée au second message WAP get_cofig, et conçue pour recevoir un second message WAP new_config_data provenant du terminal mobile, ainsi que pour propager un second message new_config_data audit serveur Web, le serveur Web est en outre conçu pour recevoir ledit second message new_config_data et, à la réponse à la réception dudit seconde message new_config_data, pour propager ledit second message new_config_data audit module de configuration commun, et le module de configuration commun est en outre conçu :
(c) pour communiquer avec le serveur Web afin de recevoir ledit premier message new config_data ou ledit second message new_config_data, et
(d) à la réponse à la réception dudit premier message new_config_data ou dudit second message new_config_data, à appliquer en entrée ledit premier message new_config_data ou ledit second message new_config_data à ladite base de données de profils utilisateurs pour qu'elle travaille sur ledit profil utilisateur afin de modifier les données de configuration de services H.323 de la base de données de profils utilisateurs.

4. Système destiné à la configuration de services H.323 d'un service proposé par le réseau H.323 configurable par un utilisateur, le service configurable par l'utilisateur étant au moins l'un d'un service de renvoi automatique d'appel, d'un service de composition par numéro abrégé, d'un service de recherche, d'un service de courriel vocal, d'un service de rappel et d'un service de réponse à une télécopie, le système incluant l'appareil selon les revendications 1 ou 2, et
**caractérisé en ce que** le système comprend une base de données de profils utilisateurs conçue pour stocker les données de configuration de services H.323 se rapportant aux utilisateurs dudit service configurable par l'utilisateur, et au moins une station de base GSM combinée à une passerelle H.323 et à une passerelle WAP en vue de communication avec le terminal sans fil mobile, la passerelle WAP étant reliée au réseau H.323 et conçue pour convertir une page Web d'entrée de données de configuration de services H.323 procurée par le réseau H.323 à une page Web d'entrée de données de configuration de services H.323 de type WAP conformément à une aptitude au protocole WAP du terminal mobile sans fil en vue d'une utilisation par le terminal mobile sans fil pour opérer sur lesdites données de configuration de services H.323 se rapportant à l'utilisateur parmi la base de données de profils utilisateurs.

5. Système selon la revendication 4, **caractérisé en ce que** la passerelle WAP est proximale de la station de base GSM / de la passerelle H.323.

6. Système selon l'une quelconque des revendications 4 à 5, **caractérisé en ce que** les points de connexion H.323 sont conçus pour communiquer avec le serveur Web grâce au protocole HTTP.

7. Système selon l'une quelconque des revendications 4 à 6, **caractérisé en ce que** la passerelle WAP est conçue pour communiquer avec le serveur Web grâce au protocole HTTP.

8. Système selon l'une quelconque des revendications 4 à 7, **caractérisé en ce que** la seconde page Web d'entrée de données de configuration est une interface de navigateur Web.

9. Système selon l'une quelconque des revendications 4 à 8, **caractérisé en ce que** le terminal sans fil mobile validé pour le protocole WAP est un téléphone mobile GSM validé pour le protocole WAP.

10. Procédé destiné à la configuration de services H.323 dans un système conforme à l'une quelconque des revendications 4 à 8 **caractérisé** dans :
la fourniture d'une base de données de profils utilisateurs accessible à partir d'un module de configuration commun et à partir du réseau H.323,
la communication à partir du terminal sans fil mobile vers le dispositif du réseau WAP d'un souhait de modifier des données de configuration de services H.323 d'un profil utilisateur détenu dans la base de données de profils utilisateurs,
la propagation, à partir du dispositif de réseau WAP, jusqu'au terminal sans fil mobile, d'une première page Web d'entrée de données de configuration de services H.323 de type WAP rendue lisible par le dispositif du réseau WAP en convertissant dans le dispositif du réseau WAP une page Web d'entrée de données de configuration de services H.323 vers une première page Web d'entrée de données de configuration de services H.323 de type WAP conformément à une aptitude au protocole WAP du terminal mobile sans fil,
la réception dans le terminal sans fil mobile en provenance du dispositif du réseau WAP de la première page Web d'entrée de données de configuration de services H.323 de type WAP pouvant être lue par le dispositif du réseau WAP,
la communication à partir du terminal sans fil mobile des premières nouvelles données de configuration de services H.323 au dispositif du réseau WAP entrées dans la première page Web d'entrée de données de configuration de services H.323 de type WAP, et
la lecture dans le dispositif du réseau WAP desdites premières données nouvelles de configuration de services H.323 et le transport desdites premières données nouvelles de configuration de services H.323 vers le module de configuration commun,
et
le travail sur lesdites données de configuration de services H.323 se rapportant à l'utilisateur par l'application grâce au module de configuration commun, en réponse à la réception desdites premières données nouvelles de configuration de services H.323, desdites premières données nouvelles de configuration de services H.323 sur lesdites données de configuration de services H.323 se rapportant à l'utilisateur de la base de données de profils utilisateurs.

11. Procédé selon la revendication 10, **caractérisé en ce qu'**il comprend :
une communication provenant du point de connexion H.323 vers le serveur Web d'un souhait de modifier une configuration de services H.323 d'un profil utilisateur détenu dans une base de profils utilisateurs,
la réception au point de connexion H.323, en provenance du serveur Web, d'une deuxième page Web d'entrée de données de configuration de services H.323 lisibles par le serveur Web,
la communication provenant du point de connexion H.323 vers le serveur Web de deuxièmes données de configuration de services H.323 entrées dans la seconde page Web d'entrée de données de configuration de services H.323, et
la lecture par le serveur Web desdites deuxièmes nouvelles données de configuration de services H.323 et
le transport desdites données nouvelles de configuration de service H.323 vers le module de configuration commun,
et
le travail sur lesdites données de configuration de services H.323 se rapportant à l'utilisateur par l'application grâce au module de configuration commun, en réponse à la réception desdites deuxièmes données nouvelles de configuration de services H.323, desdites deuxièmes données nouvelles de configuration de services H.323 sur lesdites données de configuration de services H.323 se rapportant à l'utilisateur de la base de données de profils utilisateurs.

12. Procédé selon la revendication 10 ou 11,
**caractérisé en ce qu'**il comprend :
la réception dans le réseau H.323, en provenance du terminal sans fil mobile, par l'intermédiaire d'une communication avec le terminal sans fil mobile utilisant une station de base GSM combinée avec une passerelle H.323 et avec une passerelle WAP, de troisièmes données nouvelles de configuration de services H.323 et opérant grâce au réseau H.323, en réponse à la réceptions desdites troisièmes données de configuration de services H.323, sur lesdites données de configuration de services H.323 se rapportant à l'utilisateur de la base de données de profils utilisateurs en conjonction avec lesdites troisièmes données nouvelles de configuration de services H.323.

13. Procédé selon les revendications 10 à 12,
**caractérisé en ce qu'**il procure une réponse d'accusé de réception au terminal sans fil mobile audit travail sur lesdites données de configuration de services H.323 se rapportant à l'utilisateur parmi la base de données de profils utilisateurs avec lesdites données nouvelles de configuration de services H.323.

14. Procédé selon l'une quelconque des revendications 10 à 13,
**caractérisé en ce que :**
(a) il fournit le module de configuration commun en communication avec le serveur Web et le serveur WAP,
(b) le serveur Web reçoit à partir du point de connexion normal H.323 sur un PC le premier message HTTP get_cofig signalant un souhait pour modifier une configuration de services H.323 d'un profil utilisateur détenu dans la base de données de profils utilisateurs, puis communique au point de connexion normal H.323 sur un PC le premier message HTTP resp_cofig comme constituant une réponse appropriée au premier message HTTP get_cofig, puis reçoit du point de connexion normal H.323 sur un PC le nouveau message au protocole WAP new_config_data et transporte ensuite le nouveau message new_config_data vers le module de configuration commun,
(c) le serveur WAP reçoit du terminal sans fil mobile le second message au protocole WAP get_cofig signalant un souhait de modifier une configuration de services H.323 d'un profil utilisateur détenu dans la base de données de profils utilisateurs, puis communique au terminal sans fil mobile le second message au protocole WAP resp_cofig comme étant une réponse appropriée au second message au protocole WAP get_cofig, puis reçoit en provenance du terminal sans fil mobile le second message au protocole WAP new_config_data et, ensuite, transporte le second message new_config_data, au module de configuration de commande, et
(d) le module de configuration commun, en réponse à la réception du premier message new_config_data ou du second message new_config_data, propage le premier message new_config_data ou le second message new_config_data à ladite base de données de profils utilisateurs pour opérer sur ledit profil utilisateur afin de modifier les données de la base de données de profils utilisateurs.

15. Procédé selon la revendication 14, **caractérisé en ce que :**
(e) la base des données de profils utilisateurs génère un accusé de réception en réponse à la réception du premier message new_config_data ou du second message new_config_data et une modification réussie des données de la base de données de profils utilisateurs, et propage l'accusé de réception au module de configuration commun, et
(f) le module de configuration commun et le serveur Web, ou le module de configuration commun et le serveur WAP transportent en retour en coopérant l'accusé de réception vers le terminal sans fil mobile.

16. Procédé selon l'une quelconque des revendications 10 à 13,
**caractérisé en ce que**
(g) il procure le module de configuration commun en communication avec le serveur Web,
(h) il procure la passerelle au protocole WAP en communication avec le serveur Web,
(i) le serveur Web reçoit en provenance du point de connexion normal H.323 sur un PC le premier message HTTP get_cofig signalant un souhait pour modifier une configuration de services H.323 d'un profil utilisateur détenu dans la base de données de profils utilisateurs, puis communique au point de connexion normal H.323 sur un PC le premier message HTTP resp_cofig comme constituant une réponse appropriée au premier message HTTP get_cofig, puis reçoit du point de connexion normal H.323 sur un PC le nouveau message au protocole WAP new_config_data et transporte ensuite le message new_config_data vers le module de configuration commun,
(j) la passerelle WAP reçoit du terminal sans fil mobile le second message au protocole WAP get_cofig pour signaler un souhait de modifier une configuration de services H.323 appartenant à un profil d'utilisateur détenu dans la base de données de profils utilisateurs, puis communique au terminal sans fil mobile le second message au protocole WAP resp_cofig comme constituant une réponse appropriée au message au protocole WAP get_cofig puis reçoit du terminal sans fil mobile le second message au protocole WAP new_config_data et transporte ensuite le second message new_config_data vers le serveur Web,
(k) le serveur Web, en réponse à la réception du second message new_config_data transporte le second message new_config_data vers le module de configuration commun, et
(l) le module de configuration commun, en réponse à la réception du premier message new_config_data ou du second message new_config_data, propage le premier message new_config_data ou le second message new_config_data vers ladite base de données de profils utilisateurs afin d'opérer sur ledit profil utilisateur pour modifier les données de la base de données de profils utilisateurs.

17. Procédé selon la revendication 16, **caractérisé en ce que :**
(m) la base des données de profils utilisateurs génère un accusé de réception en réponse à la réception du premier message new_config_data ou du second message new_config_data et une rectification réussie des données de la base de données de profils utilisateurs, et propage l'accusé de réception vers le module de configuration commun, et
(n) le module de configuration commun et le serveur Web, ou bien le module de configuration commun, le serveur Web et la passerelle WAP transportent en retour et en coopérant l'accusé de réception vers le terminal sans fil mobile.
